# EUROPÄISCHE PATENTSCHRIFT

(11) **EP 0 711 722 B1**
(45) Veröffentlichungstag und Bekanntmachung des Hinweises auf die Patenterteilung: **07.01.1998**
(21) Anmeldenummer: 95116230.4
(22) Anmeldetag: 14.10.1995
(51) Int. Cl.: B65G 69/28

(54) **Überfahrbrücke für Rampen**
Traversing bridge for loading ramps
Passerelle de transbordement pour rampes

(30) Priorität: 12.11.1994 DE 4440485
(43) Veröffentlichungstag der Anmeldung: 15.05.1996
(73) Patentinhaber: Alten, Kurt, D-30967 Wennigsen (DE)
(72) Erfinder: Borchardt, Horst, D-30967 Wennigsen (DE)
(74) Vertreter: Depmeyer, Lothar

(56) Entgegenhaltungen:
- US-A- 3 984 891
- US-A- 5 347 672

## Beschreibung

Die Erfindung bezieht sich auf eine Überfahrbrücke für Rampen mit einer an ihrem rampenseitigen Ende um eine waagerechte Achse verschwenbkbaren Brückenplatte, die an ihrem freien, vorderen Ende mit einer aus- und einklappbaren Verlängerung zum Auflegen auf eine zu be- bzw. entladende Plattform versehen ist und sich in der Ruhestellung über die nach unten geklappte Verlängerung auf einem Widerlager abstützt (siehe zum Beispiel die DE-A-3407165).

Diese Verlängerungen liegen im ausgeklappten Zustand bei der in Betrieb befindlichen Brücke im wesentlichen in der Brückenebene, wobei sich die Brückenplatte über die Verlängerung auf der Plattform abstützt und die Brückenplatte allen Höhenänderungen der Plattform folgen kann. Unter diesen Voraussetzungen müssen die Verlängerung und damit auch die zur Anlenkung der Verlängerung an der Brückenplatte dienenden Elemente die Verkehrslast zu tragen imstande sein. Darüber hinaus werden von diesen Elementen auch die Kräfte übertragen, die in der Ruhestellung der Brücke d.h. bei nach unten geklappter Verängerung und der in der Rampenebene befindlichen Brückenplatte durch den allgemeinen Rampenverkehr entstehen.

Nach bekannten Vorschlägen sind die vorgenannten Anlenkelemente scharnierartig mit Bolzen und Auge ausgeführt. Diese Elemente haben aber den Nachteil, dass sie nicht über die gesamte Breite der anzulenkenden Teile wirksam sind, vielmehr können sich die an der Brückenplatte befindlichen und die an der Verlängerung angeordnenten Augen nur über einen Teil der Scharnierlänge erstrecken.

Die Erfindung will hier Abhilfe schaffen und eine Anlenkung der Verlängerung vorschlagen, die sich mit ihren tragenden Elementen über die ganze Breite der Anlenkstelle erstrecken und daher höher belastet werden kann.

Zur Lösung dieser Aufgabe ist erfindungsgemäss die Verlängerung an ihrem der Brückenplatte zugekehrten Rand mit einem bogenförmigen, sich über die Länge der Gelenkstelle erstreckenden Fortsatz im Querschnitt nach Art eines Sektors eines Kreisringes versehen, der in ein sich ebenfalls über die Länge der Gelenkstelle erstreckendes und an der Brückenplatte befestigtes Profil hineinragt, das einen zur Auflage des Fortsatzes dienenden und die Anlenkachse bildenden Wulst aufweist, der aussen dem inneren Radius des Fortsatzes entspricht.

Dieser zur Bildung der Anlenkstelle dienende Fortsatz und der ihn unterfassende Wulst erstrecken sich also über die gesamte Länge der Gelenkstelle. Dadurch entstehen entsprechend grosse Berührungsflächen zwischen diesen Elementen und vergleichsweise geringe Belastungsdrücke.

Wichtig ist ferner, dass insb. in der Wirkstellung der Verlängerung bei der vorgenannten Gelenkausbildung die dabei auftretenden Momente von Flächenteilen des Fortsatzes und des Profiles aufgenommen werden, die sich im oberen und unteren Abschnitt des Profils befinden, also einen vergleichsweise grossen gegenseitigen Abstand haben.

Weitere Einzelheiten der Erfindung werden anhand der Zeichnung erläutert, in der ein Ausführungsbeispiel der Erfindung dargestellt ist. Es zeigen :
Fig. 1 eine Überfahrbrücke für Rampen im Grundriss, wobei jedoch aus Gründen der vereinfachten Darstellung ein linker Teil der Verlängerung als in der Wirkstellung und ein rechter Teil der Verlängerung als in der Ruhestellung (Stützstellung) dargestellt sind,
Fig. 2 einen Teilschnitt nach der Linie II - II von Fig. 1 und
Fig. 3 einen Teilschnitt nach der Linie III - III von Fig.1.

Die Brückenplatte 1 der Überfahrbrücke ist an ihrem hinteren Ende rampenseitig um eine waagerechte Achse 2 schwenkbar an der Rampe 3 gelagert. Sie befindet sich in einer der Rechteckform der Brückenplatte 1 entsprechenden Ausnehmung 12 der Rampe 3. Die vordere Kante 4 der Brückenplatte 1 wird praktisch durch das die Oberfläche der Brückenplatte 1 bildende Deckblech 5 bestimmt.

Unterhalb des Deckbleches 5, und zwar im Bereich der Kante 4 ist an der Brückenplatte 1 ein Profil 6 fest angeordnet. Es ist im wesentlichen u-förmig gestaltet, wobei jedoch das oben offene Profil 4 am hinteren Schenkel 7 oben eine Abwinkelung 8 vorgesehen ist, die zum freien Brückenende hin gerichtet ist. Der vordere der beiden etwa senkrechten Schenkel ist mit 9 bezeichnet, er ist am freien Ende als Wulst 10 ausgeführt, der eine Aussenfläche nach Art eines Zylindermantelteils geformt ist, dessen Längsachse die Schwenkachse der Verlängerung 11 der Brückenplatte 1 bestimmt.

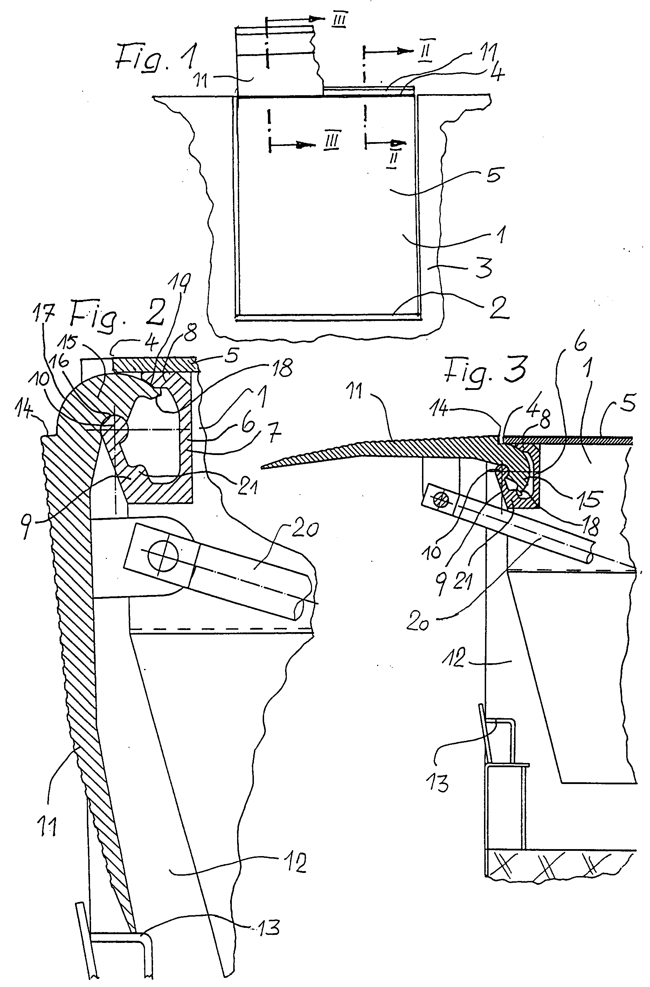

Die Verlängerung 11 liegt in der ausgeklappten Stellung gemäss Fig. 3 auf der zu be- bzw. entladenden Plattform z.B. eines Lastkraftwagens auf; dabei stützt sich die Brückenplatte 1 über die Verlängerung 11 auf dieser Plattform ab. Eine Abstützung der Brückenplatte 1 erfolgt ferner in der Stellung der Verlängerung 11 gemäss Fig. 2; dabei ist die Verlängerung 11 etwa um 90° nach unten geklappt und liegt mit der Spitze auf einem in der Vertiefung 12 befindlichen Widerlager 13 auf. Die Brückenplatte 1 liegt dann in der Rampenebene, und der Rampenbetrieb kann dann ungestört vonstatten gehen.

Im Anschluss an eine Stufe 14, deren Höhe der Wandstärke des Deckbleches 5 entspricht, hat die Verlängerung 11 einen Fortsatz 15, dessen Querschnitt nach Art eines Sektors eines Kreisringes geformt und dessen Mittelpunkt mit der Längsachse des Wulstes 10 zusammenfällt, da der Radius des Wulstes 10 dem Radius der am inneren Umfang gelegenen Kreiskrümmung des Fortsatzes 15 entspricht.

Die wirksame Innenfläche des Fortsatzes 15, die auf dem Wulst 10 aufliegt, ist mit 16 bezeichnet, die am äusseren Umfang gelegene Fläche des Fortsatzes 15 hat das Bezugszeichen 17. Diese Fläche 17 geht am hinteren Ende des Fortsatzes 15 in eine vorspringende Nase 18 über. Der Fläche 17 ist zudem an der Abwinkelung 8 eine Anlagefläche 19 zugeordnet, deren Krümmung derjenigen der Fläche 17 entspricht.

Die Verschwenkung der Verlängerung 11 erfolgt im übrigen durch den Schwenkzylinder 20.

Wie aus Fig. 2 erkennbar ist, wird die etwa senkrechte Stellung der Verlängerung 11 durch die Nase 18 sichergestellt, die die Abwinkelung 8 hinterfasst, um so eine weitergehende Verschwenkung der Verlängerung 11 auszuschalten. Die Stützwirkung der Verlängerung wird unter diesen Voraussetzungen durch die Abwinkelung 8 sichergestellt, die die Nase 18 und die Fläche 17 berührt. Diese Kontaktnahme erfolgt dabei über die gesamte Länge der Verlängerung 11, da das Profil 6 einerseits und der Fortsatz 15 andererseits jeweils der Erstreckung der Verlängerung 1 entsprechen.

In der Gebrauchsstellung der Brücke gemäss Fig. 3 liegt die Nase 18 an einer Verdickung 21 des Schenkels 9 an. Zugleich ist auch nahe unterhalb des Deckbleches 5 die Anlagefläche 19 der Abwinkelung 8 wirksam; hier legt sich die Fläche 17 an. Da diese Anlagestellen einen grossen gegenseitigen Abstand haben, können die durch die Abstützung entstehenden Momente gut abgefangen werden.

Es sei erwähnt, dass die Verlängerung 11 auch aus zwei oder mehreren, in Brückenquerrichtung gesehen hintereinander gelegenen Abschnitten bestehen. In diesem Falle entsprechen alle aktiven Abschnitte den Querschnittsforderungen gemäss Zeichnung.

Ferner sei vermerkt, dass eine Anlage der Stufe 14 an der Stirnseite des Deckbleches 5 nicht erforderlich ist. Hier kann also - wie aus Fig. 3 ersichtlich - sogar ein kleiner Spalt gegeben sein. Aus diesen Gründen können auch bei der Brückenherstellung grössere Toleranzen gewährt werden.

## Patentansprüche

1. Überfahrbrücke für Rampen (3) mit einer an ihrem rampenseitigen Ende um eine waagerechte Achse (2) verschwenkbaren Brückenplatte (1), die an ihrem freien, vorderen Ende mit einer aus- und einklappbaren Verlängerung (11) zum Auflegen auf eine zu be- bzw. entladende Plattform versehen ist und sich in der Ruhestellung über die nach unten geklappte Verlängerung (11) auf einem Widerlager (13) abstützt, dadurch gekennzeichnet, dass die Verlängerung (11) an ihrem der Brückenplatte zugekehrten Rand mit einem bogenförmigen, sich über die Länge der Gelenkstelle erstreckenden Fortsatz (15) im Querschnitt nach Art eines Sektors eines Kreisringes versehen ist, der in ein sich ebenfalls für die Länge der Gelenkstelle erstreckendes und an der Brückenplatte (1) befestigtes Profil (6) hineinragt, das einen zur Auflage des Fortsatzes (15) dienenden und die Anlenkachse bestimmenden Wulst (10) aufweist, der aussen dem inneren Radius des Fortsatzes (15) entspricht.

2. Brücke nach Anspruch 1, dadurch gekennzeichnet, dass die von dem grösseren Radius bestimmte Aussenfläche (17) des Fortsatzes (15) an ihrem - von der Verlängerung (11) aus gesehen - hinteren Ende eine vorzugsweise vorspringende Nase (18) aufweist, der zwei Anschläge (8,21) am Profil (6) zugeordnet sind, welche die Schwenkbewegung der Verlängerung (11) begrenzen.

3. Brücke nach Anspruch 1, dadurch gekennzeichnet, dass das Profil ein im wesentlichen oben offenes U-Profil (6) ist, dessen an der Brückenplatte (1) vorne liegender Schenkel (9) mit dem Wulst (10) versehen ist und dessen anderer Schenkel (7) eine Anlagefläche (19) für die nach dem grösseren Radius verlaufende Fläche (17) des Fortsatzes (15) bildet.

4. Brücke nach Anspruch 1, dadurch gekennzeichnet, dass die Anlagefläche (19) von einer Abwinkelung (8) des anderen Schenkels (7) in Richtung auf das freie Ende der Brückenplatte (1) gebildet ist.

5. Brücke nach Anspruch 2 und 4, dadurch gekennzeichnet, dass die Abwinkelung (8) der obere Anschlag für die Nase (18) ist ( Ruhestellung der Verlängerung 11 ).

6. Brücke nach Anspruch 2, dadurch gekennzeichnet, dass sich der untere Anschlag (21) im Bereich der Wurzel des vorderen Schenkels (9) befindet ( Verdickung 21, Wirkstellung der Verlängerung 11 ).

7. Brücke nach Anspruch 1, dadurch gekennzeichnet, dass der vor der Stirnseite des Deckbleches (5) der Brückenplatte (1) befindliche Teil ( Stufe 14 ) der Verlängerung (11) im Abstand von dieser Stirnfläche angeordnet ist und sich die Verlängerung (11) in der Wirklage an dem Profil (6) abstützt.

## Claims

1. Transfer bridge for platforms (3), having a bridge plate (1), which is pivotable at its platform end about a horizontal axis (2) and is provided, at its free front end, with an outwardly and inwardly pivotable extension member (11) for support on a deck to be loaded or unloaded, said bridge plate being supported, in the inoperative position, on a support (13) via the downwardly pivoted extension member (11), characterised in that the extension member (11) is provided, on its edge facing the bridge plate, with an arcuate extension (15), which extends beyond the pivotal location and has a cross-section in the form of a sector of a circular ring, which protrudes into a profile (6), which also extends beyond the pivotal location and is mounted on the bridge plate (1), said profile having a bead (10), which serves to support the extension (15) and determines the pivotal axis, said bead corresponding externally to the inner radius of the extension (15).

2. Bridge according to claim 1, characterised in that the external surface (17) of the extension (15) is determined by the greater radius and has, at its rear end - when viewed from the extension member (11) - a preferably protruding projection member (18), which has associated therewith two stop members (8, 21) on the profile (6) which define the pivotal movement of the extension member (11).

3. Bridge according to claim 1, characterised in that the profile is a U-shaped profile (6), which is substantially open at its upper end, the portion (9) of said profile being situated at the front of the bridge plate (1) and being provided with the bead (10), and the other portion (7) of said profile forming an abutment face (19) for the surface (17) of the extension (15) extending over the greater radius.

4. Bridge according to claim 1, characterised in that the abutment face (19) is formed by an angle (8) of the other portion (7) in the direction of the free end of the bridge plate (1).

5. Bridge according to claims 2 and 4, characterised in that the angle (8) is the upper stop member for the projection member (18) (inoperative position of the extension member 11).

6. Bridge according to claim 2, characterised in that the lower stop member (21) is situated in the region of the base of the front portion (9) (thickened portion 21, operative position of the extension member 11).

7. Bridge according to claim 1, characterised in that the part (step 14) of the extension member (11) situated in front of the end face of the cover sheet (5) of the bridge plate (1), is disposed at a spacing from this end face, and the extension member (11) is supported on the profile (6) in the operative position.

## Revendications

1. Niveleur de quai (3) comportant un tablier (1) qui, à son extrémité située du côté du quai, est monté basculant par rapport à un axe (2) horizontal, qui est muni à son extrémité avant libre d'une rallonge (11) pouvant être sortie et rentrée, destinée à s'appliquer à une plate-forme à cnarger ou à décharger, et qui, en la position de repos, prend appui sur une butée (13) par l'intermédiaire de la rallonge (11) rabattue vers le bas, caractérisé en ce que la rallonge (11) est munie, sur son bord tourné vers le tablier, d'un prolongement (15) en forme d'arc s'étendant sur toute la longueur du point d'articulation, qui, en section transversale, est du genre d'un secteur d'anneau circulaire et qui rentre dans une pièce (6) profilée qui s'étend également sur toute la longueur du point d'articulation, qui est fixée au tablier (1) et qui comporte un renflement (10) qui sert à supporter le prolongement (15), qui forme l'axe l'articulation et qui correspond à l'extérieur au diamètre intérieur du prolongement (15).

2. Niveleur suivant la revendication 1, caractérisé en ce que la surface (17) extérieure, déterminée par le plus grand rayon, du prolongement (15) comporte à son extrémité arrière - vu de la rallonge (11) - un ergot (18) de préférence en saillie, auquel sont associées deux butées (8, 21) de la pièce (6) profilée, qui imitent le mouvement de bascule de la rallonge (11).

3. Niveleur suivant la revendication 1, caractérisé en ce que le pièce (6) profilée à un profil en U sensiblement ouvert vers le haut, dont la branche se trouvant à l'avant sur le tablier est munie du renflement (10) et dont l'autre branche (7) forme une surface (19) de contact pour la surface (17) du prolongement (15) s'étendant sur le plus grand rayon.

4. Niveleur suivant la revendication 1, caractérisé en ce que la surface (19) de contact est formée par une partie (8) de l'autre branche (7) coudée en direction de l'extrémité libre du tablier (1).

5. Niveleur suivant la revendication 2 et 4, caractérisé en ce que la partie (8) coudée est la butée supérieure destinée à l'ergot (18) (position de repos de la rallonge 11).

6. Niveleur suivant la revendication 2, caractérisé en ce que la butée (21) inférieure se trouve dans la zone de l'origine de la branche (9) avant (épaississement 21, position active de la rallonge 11).

7. Niveleur suivant la revendication 1, caractérisé en ce que la partie (gradin 14) de la rallonge (11) se trouvant devant la face latérale de la tôle (5) de couverture du tablier (1) est disposée à distance de cette face latérale et en ce que la rallonge (11) prend appui sur la pièce (6) profilée en la position active.
